# FASCICULE DE BREVET EUROPEEN

(11) **EP 1 597 103 B1**
(45) Date de publication et mention de la délivrance du brevet: **14.06.2006**
(21) Numéro de dépôt: 04709262.2
(22) Date de dépôt: 09.02.2004
(51) Int. Cl.: B60J 7/14, B60J 7/20

(54) **TOIT ESCAMOTABLE DE VEHICULE**
KLAPPVERDECK FÜR EIN FAHRZEUG
RETRACTABLE ROOF FOR A VEHICLE

(30) Priorité: 28.02.2003 FR 0302488
(43) Date de publication de la demande: 23.11.2005
(73) Titulaire: Seba, 75011 Paris (FR)
(72) Inventeur: QUEVEAU, Gérard, F-79140 Cerizay (FR); GUILLEZ, Jean-Marc, F-79140 Cirieres (FR); QUEVEAU, Paul, F-79140 Montravers (FR)
(74) Mandataire: Breese, Pierre
(86) Numéro de dépôt international: PCT/FR2004/000293
(87) Numéro de publication internationale: WO 2004/082973

(56) Documents cités:
- FR-A- 2 791 007
- US-A- 5 558 388
- US-A- 5 975 620

## Description

La présente invention concerne un toit escamotable de véhicule, et plus particulièrement un tel toit comprenant au moins un élément de toit avant, un élément de toit arrière et deux éléments de toit latéraux rigides, déplaçables entre une position dans laquelle ils recouvrent l'habitacle du véhicule et une position dans laquelle ils sont rangés dans le coffre arrière du véhicule, des moyens d'entraînement étant prévus pour rabattre les éléments de toit latéraux sensiblement perpendiculairement au plan de symétrie du véhicule autour d'un axe de rotation sensiblement vertical.

Un tel toit escamotable permet de transformer un véhicule du type berline ou coupé en un véhicule du type cabriolet. US 5 975 620 A décrit un tel toit escamotable selon le préambule de la revendication 1.

Une des difficultés rencontrées dans la conception de tels toits réside dans le système d'entraînement des éléments de toit latéraux. Une autre est celle du verrouillage de ces éléments en position de recouvrement de l'habitable.

La présente invention vise à pallier ces difficultés.

A cet effet, l'invention a pour objet un toit escamotable de véhicule, comprenant au moins un élément de toit avant, un élément de toit arrière et deux éléments de toit latéraux rigides déplaçables entre une position dans laquelle ils recouvrent l'habitacle du véhicule et une position dans laquelle ils sont rangés dans le coffre arrière du véhicule, des moyens d'entraînement étant prévus pour rabattre les éléments de toit latéraux sensiblement perpendiculairement au plan de symétrie du véhicule autour d'un axe de rotation sensiblement vertical, caractérisé par le fait que lesdits moyens d'entraînement comprennent une platine de support montée sur ledit élément de toit arrière et une platine d'entraînement solidaire d'un des éléments de toit latéraux montée à rotation sur ladite platine de support autour dudit axe de rotation, l'une desdites platines portant un doigt engagé dans une rainure de l'autre platine, des moyens moteurs étant prévus pour déplacer ledit doigt par rapport à la platine qui le porte de manière à provoquer la rotation dudit élément de toit latéral par rapport audit élément de toit arrière par interaction dudit doigt avec ladite rainure.

On observera que la platine qui porte le doigt peut être limitée à des moyens de déplacement et de guidage du doigt.

Dans un mode de réalisation particulier de l'invention, ladite rainure est formée dans la platine d'entraînement.

Egalement dans un mode de réalisation particulier de l'invention, ledit doigt est agencé pour être déplacé en translation sensiblement rectiligne.

Plus particulièrement, ledit doigt peut être entraîné par un écrou guidé en translation et monté sur un arbre rotatif fileté entraîné par un moteur électrique.

Dans un autre mode de réalisation, ledit doigt est entraîné par une crémaillère coopérant mue par un moteur électrique.

Egalement dans un mode de réalisation particulier de l'invention, ledit moteur électrique est monté dans ledit élément de toit arrière.

Dans un autre mode de réalisation, ledit moteur électrique est monté dans ledit élément de toit latéral.

Lesdits moyens moteurs peuvent être agencés pour entraîner des moyens de verrouillage d'au moins un élément de toit.

En particulier, lesdits moyens de verrouillage peuvent comprendre au moins un doigt de poussée entraîné par un écrou guidé en translation et monté sur un arbre rotatif fileté entraîné par ledit moteur électrique.

Le toit selon l'invention peut également comprendre des glissières agencées pour coopérer avec des galets solidaires desdits éléments de toit, lesdits moyens de verrouillage comprenant des rampes de ladite crémaillère agencées pour bloquer lesdits galets sur lesdites glissières.

On décrira maintenant, à titre d'exemple non limitatif, un mode de réalisation particulier de l'invention, en référence aux dessins schématiques annexés dans lesquels :
- la figure 1 est une vue en perspective d'un mode de réalisation d'un dispositif selon l'invention ;
- la figure 2 est une vue de dessus d'un autre mode de réalisation de l'invention ; et
- la figure 3 est une vue de côté en coupe d'un toit escamotable selon l'invention correspondant au mode de réalisation de la figure 2.

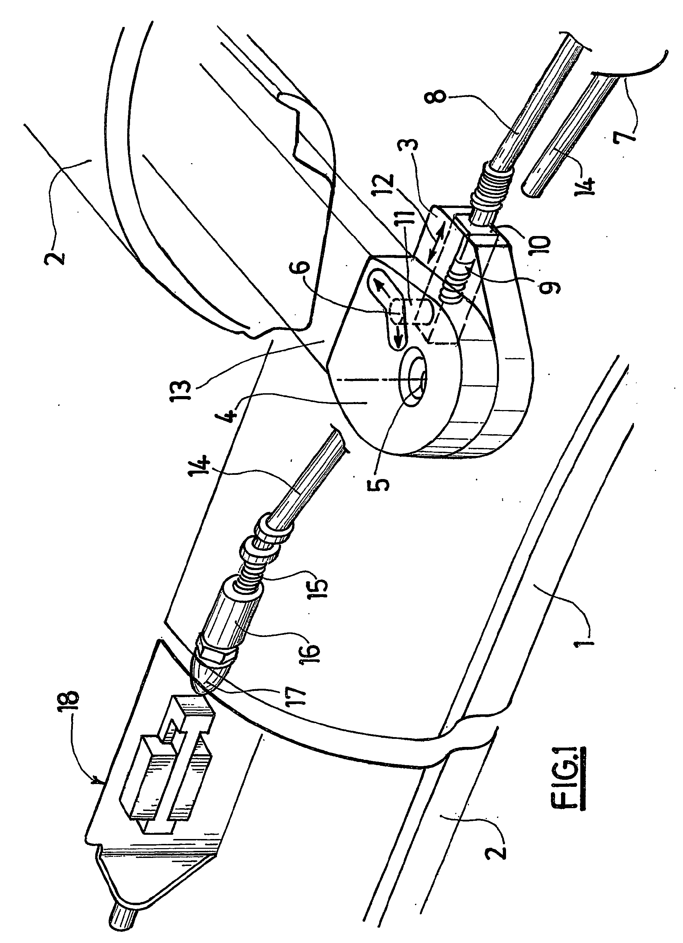

On voit à la figure 1 l'élément arrière 1 d'un toit escamotable, et son élément latéral gauche 2.

Une platine de support 3 est fixée à l'élément de toit arrière 1. Une platine d'entraînement 4 est montée à rotation sur la platine de support 3 autour d'un axe 5.

Une rainure 6 formant came est formée dans la platine d'entraînement 4.

Un moteur électrique 7 est également monté dans l'élément arrière 1. Une tige 8 est montée sur l'arbre de sortie du moteur, cette tige comportant une extrémité 9 filetée.

L'extrémité filetée 9 de la tige 8 est engagée dans un écrou 10 guidé en translation rectiligne dans un logement de la platine de support 3.

Un doigt 11 est solidaire de l'écrou 9 et peut donc être déplacé en translation par le moteur 7 dans le sens de la flèche 12. Le doigt 11 est engagé dans la rainure 8 de sorte que le déplacement du doigt 11 provoque une rotation de la platine d'entraînement 4 par rapport à la platine de support 3.

Un bras 13 est monté solidaire de la platine 4. Le bras 13 porte l'élément de toit latéral 2. Ainsi, le moteur 7 peut amener l'élément 2 de sa position de recouvrement à sa position de rangement, et réciproquement.

Le moteur 7 possède une deuxième sortie entraînant une tige 14. L'extrémité 15 de la tige 14 est filetée et coopère avec un écrou 16 guidé en translation. Un doigt de poussée 17 est solidaire de l'écrou 16.

Des moyens 18 de verrouillage de toit de tout type convenable sont actionnés par le doigt de poussée 17.

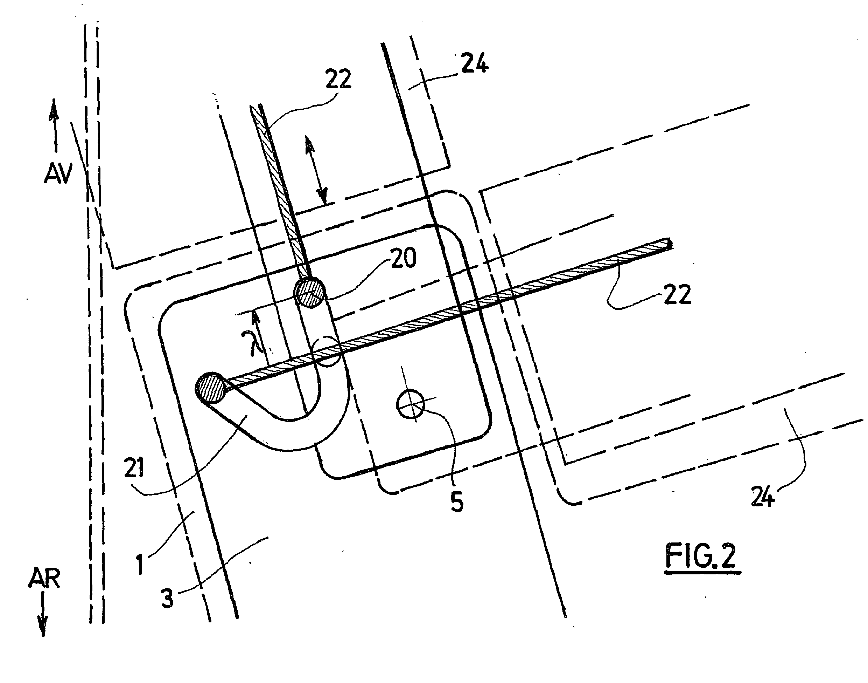

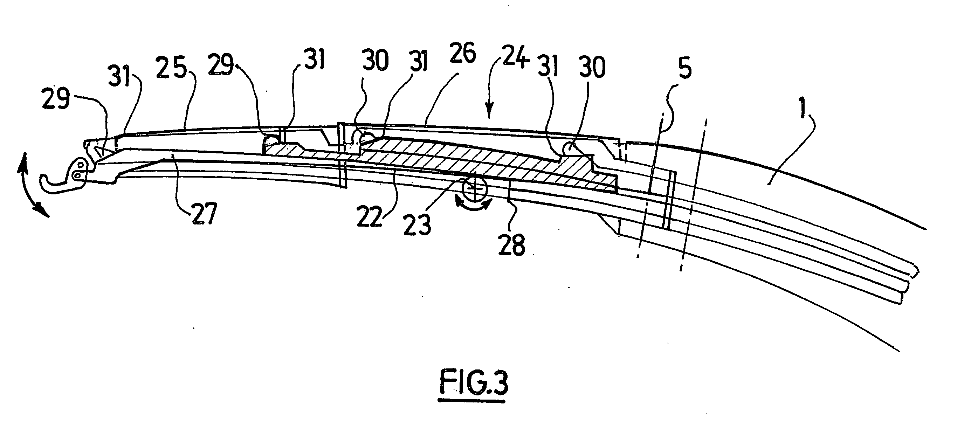

Dans le mode de réalisation des figures 2 et 3, le doigt 20 engagé dans la rainure 21 est déplacé par une crémaillère 22 actionnée par un moteur électrique 23 logé dans l'élément de toit latéral 24. L'entraînement du moteur 23 provoque donc, comme précédemment la rotation de l'élément 24 autour de l'axe 5. L'élément 24 est montré à la figure 2 dans sa position de recouvrement et dans sa position de rangement.

Les éléments de toit avant 25 et 26 sont coulissants dans des glissières 27 et 28 de l'élément latéral 24, par l'intermédiaire de galets 29 et 30.

La crémaillère 22 possède des rampes 31 susceptible de venir verrouiller les galets 29 et 30. En outre, l'extrémité de la crémaillère 22 coopère avec un crochet 32 de verrouillage sur le haut du pare-brise du véhicule.

Lorsque la crémaillère 22 est entraînée, elle commence par déverrouiller les éléments de toit. Le début de la rainure 21 étant rectiligne, l'élément latéral demeure fixe. Les éléments de toit avant sont alors coulissés en position de rangement, et le doigt provoque la rotation de l'élément latéral.

## Revendications

1. Toit escamotable de véhicule, comprenant au moins un élément de toit avant (2 ; 25, 26), un élément de toit arrière (1) et deux éléments de toit latéraux (2 ; 24) rigides déplaçables entre une position dans laquelle ils recouvrent l'habitacle du véhicule et une position dans laquelle ils sont rangés dans le coffre arrière du véhicule, des moyens d'entraînement étant prévus pour rabattre les éléments de toit latéraux sensiblement perpendiculairement au plan de symétrie du véhicule autour d'un axe de rotation sensiblement vertical, **caractérisé par le fait que** lesdits moyens d'entraînement comprennent une platine de support (3) montée sur ledit élément de toit arrière et une platine d'entraînement (4) solidaire d'un des éléments de toit latéraux montée à rotation sur ladite platine de support autour dudit axe de rotation (5), l'une desdites platines portant un doigt (11 ; 20) engagé dans une rainure (6 ; 21) de l'autre platine, des moyens moteurs (7 ; 23) étant prévus pour déplacer ledit doigt par rapport à la platine qui le porte de manière à provoquer la rotation dudit élément de toit latéral par rapport audit élément de toit arrière par interaction dudit doigt avec ladite rainure.

2. Toit escamotable selon la revendication 1, dans lequel ladite rainure est formée dans la platine d'entraînement.

3. Toit escamotable selon l'une quelconque des revendications 1 et 2, dans lequel ledit doigt est agencé pour être déplacé en translation sensiblement rectiligne.

4. Toit escamotable selon la revendication 3, dans lequel ledit doigt est entraîné par un écrou (10) guidé en translation et monté sur un arbre rotatif fileté (8) entraîné par un moteur électrique (7).

5. Toit escamotable selon la revendication 3, dans lequel ledit doigt est entraîné par une crémaillère (22) coopérant mue par un moteur électrique (23).

6. Toit escamotable selon l'une quelconque des revendications 4 et 5, dans lequel ledit moteur électrique est monté dans ledit élément de toit arrière.

7. Toit escamotable selon l'une quelconque des revendications 4 et 5, dans lequel ledit moteur électrique est monté dans ledit élément de toit latéral.

8. Toit escamotable selon l'une quelconque des revendications 1 à 7, dans lequel lesdits moyens moteurs sont agencés pour entraîner des moyens de verrouillage (18 ; 31) d'au moins un élément de toit.

9. Toit escamotable selon la revendication 8, dans lequel lesdits moyens de verrouillage comprennent au moins un doigt de poussée (17) entraîné par un écrou (16) guidé en translation et monté sur un arbre rotatif fileté (14) entraîné par ledit moteur électrique (7).

10. Toit escamotable selon l'ensemble des revendications 5 et 8, comprenant des glissières (27, 28) agencées pour coopérer avec des galets (29, 30) solidaires desdits éléments de toit, et dans lequel lesdits moyens de verrouillage comprennent des rampes (31) de ladite crémaillère agencées pour bloquer lesdits galets sur lesdites glissières.

## Claims

1. Retractable roof of a vehicle, comprising at least one front roof element (2; 25, 25), one rear roof element (1) and two rigid side roof elements (2; 24) that can move between a position in which they cover the passenger compartment of the vehicle and a position in which they are stored in the rear boot of the vehicle, driving means being provided for folding the lateral roof elements substantially perpendicularly to the plane of symmetry of the vehicle around an axis of rotation that is substantially vertical, **characterised by** the fact that said driving means comprise a support plate (3) mounted on said rear roof element and a driving plate (4) solidly attached to one of the side roof elements mounted so as to rotate on said support plate around said axis of rotation (5), one of said plates supporting a finger (11; 20) inserted in a groove (6; 21) of the other plate, driving means (7; 23) being provided so as to move said finger in relation to the plate that supports it in order to cause the rotation of said side roof element in relation to said rear roof element by the interaction of said finger with said groove.

2. Retractable roof according to claim 1, in which said groove is formed in the driving plate.

3. Retractable roof according to either one of the claims 1 or 2, in which said finger is arranged so as to be moved in a substantially rectilinear translation movement.

4. Retractable roof according to claim 3, in which said finger is driven by a nut (10) guided in translation and mounted on a threaded rotating shaft (8) driven by an electric motor (7).

5. Retractable roof according to claim 3, in which said finger is driven by a cooperating rack (22) moved by an electric motor (23).

6. Retractable roof according to either one of claims 4 or 5, in which the electric motor is mounted in said rear roof element.

7. Retractable roof according to either one of claims 4 or 5, in which the electric motor is mounted in said side roof element.

8. Retractable roof according to any one of the claims from 1 to 7, in which said driving means are arranged so as to drive means (18; 31) for locking at least one roof element.

9. Retractable roof according to claim 8, in which said locking means comprise at least one pushing finger (17) driven by a nut (16) guided in translation and mounted on a threaded rotating shaft (14) driven by said electric motor (7).

10. Retractable roof according to all the claims from 5 to 8, comprising guide rails (27, 28) arranged so as to cooperate with rollers (29, 30) that are solidly attached to said roof elements, and in which said locking means comprise ramps (31) of said rack arranged so as to block said rollers in said guide rails.

## Patentansprüche

1. Fahrzeugschiebedach, das zumindest ein vorderes Dachelement (2; 25; 26), ein hinteres Dachelement (1) und zwei steife seitliches Dachelemente (2; 24) umfasst, die zwischen einer Position, in der sie den Fahrzeuginnenraum bedecken, und einer Position, in der sie im Kofferraum des Fahrzeugs eingefahren sind, verschiebbar sind, wobei Antriebsmittel vorgesehen sind, um die seitlichen Dachelemente deutlich senkrecht zur Symmetrieebene des Fahrzeugs um eine deutlich vertikale Rotationsachse einzufahren, **dadurch gekennzeichnet, dass** besagte Antriebsmittel eine Trägerplatte (3) umfassen, die auf besagtes hinteres Dachelement montiert ist, und eine Antriebsplatte (4), die mit einem der seitlichen Dachelemente drehbar auf besagter Trägerplatte um besagte Rotationsachse (5) montiert ist, wobei eine der besagten Platten einen Zapfen (11; 20) aufweist, der in eine Rille (6; 21) der anderen Platte eingreift, Motorisierungsmittel (7, 23) zum Verschieben des Zapfens im Verhältnis zu der ihn stützenden Platte, so dass die Rotation des besagten seitlichen Dachelements im Verhältnis zu besagtem hinteren Dachelement durch Zusammenwirken von Zapfen und Rille herbeigeführt wird.

2. Schiebedach nach Patentanspruch 1, in dem die Rille in die Antriebsplatte eingearbeitet wurde.

3. Schiebedach nach einem der Ansprüche 1 und 2, in dem der Zapfen so angeordnet ist, dass er deutlich geradlinig in einer Zug-/Schub-Bewegung verschoben werden kann.

4. Schiebedach nach Patentanspruch 3, in dem der Zapfen durch eine Mutter (10) angetrieben wird, die in einer Zug-/Schub-Bewegung verschiebbar geführt wird und auf eine rotierende Gewindewelle (8) montiert ist, die von einem Elektromotor angetrieben wird.

5. Schiebedach nach Patentanspruch 3, in dem besagter Zapfen von einem mitwirkenden Zahnrad (22) angetrieben wird, das durch einen Elektromotor (23) bewegt wird.

6. Schiebedach nach einem der Patentansprüche 4 und 5, in dem besagter Elektromotor auf besagtes hinteres Dachelement montiert ist.

7. Schiebedach nach einem der Patentansprüche 4 und 5, in dem besagter Elektromotor in besagtes seitliches Dachelement montiert ist.

8. Schiebedach nach einem der Ansprüche 1 bis 7, in dem besagte Motorisierungsmittel so angeordnet sind, dass sie die Verriegelungsmittel (18; 31) von zumindest einem Dachelement in Bewegung bringen.

9. Schiebedach nach Patentanspruch 8, in dem besagte Verriegelungsmittel zumindest einen Schubzapfen (17) umfassen, der von einer Mutter (16) angetrieben wird, welche in einer Zug-/Schubbewegung verschiebbar geführt wird und auf eine rotierende Gewindewelle (14) montiert ist, die von besagtem Elektromotor (7) angetrieben wird.

10. Schiebedach nach den Patentansprüchen 5 und 8, das Schienen (27, 28) umfasst, die so angeordnet sind, dass sie mit Rollen (29, 30), die mit besagten Dachelementen fest verbunden sind, zusammenwirken, und in dem besagte Verriegelungsmittel Rampen (31) des besagten Zahnrads umfassen, die so angeordnet sind, dass sie besagte Rollen auf besagten Schienen sperren.
